# EUROPEAN PATENT APPLICATION

(11) **EP 4 190 647 A1**
(43) Date of publication of application: **07.06.2023**
(21) Application number: 21850649.1
(22) Date of filing: 25.06.2021
(51) Int. Cl.: B60R 21/18, B60R 21/207, B60R 21/2338

(54) **OCCUPANT RESTRAINT DEVICE**

(30) Priority: 28.07.2020 JP 2020127516
(71) Applicant: Autoliv Development AB, 44783 Vargarda (SE)
(72) Inventor: MATSUSHITA, Tetsuya, Yokohama-shi, Kanagawa 222-8580 (JP)
(74) Representative: Mewburn Ellis LLP
(86) International application number: PCT/JP2021/024059
(87) International publication number: WO 2022/024620

(57) **Abstract**

To provide an occupant restraining device capable of accurately adjusting the position of an airbag upon expansion and deployment.

An occupant restraining device comprising a tension cloth (2a), both ends of which are secured to the upper and lower parts of a vehicle seat, respectively, biasing an expanding and deploying airbag (3) toward an occupant, wherein the tensile cloth (2a) is joined at a joint section on the surface of the airbag (3) at at least one location, and the airbag (3) is formed with a retaining groove (9a) that retains the tensile cloth (2a) during expansion and deployment.

## Description

### TECHNICAL FIELD

The present invention relates to an occupant restraining device provided with an airbag.
This application claims priority based on Japanese Application 2020-127516 filed July 28, 2020, which is incorporated by reference in its entirety.

### BACKGROUND ART

Airbag devices have become widely used in recent years. An airbag device is a restraining device that operates in the case of an emergency such as a vehicle collision and, for example, the airbag is expanded and deployed by gas pressure to protect the occupant. There are various types of airbag devices depending on the installation site and application.

Patent Document 1 discloses side airbag devices that are provided on both sides of a vehicle seat and expand and deploy to the sides of the occupant.

### RELATED ART DOCUMENTS

### Patent Documents

[Patent Document 1] Japanese Unexamined Patent Application 2014-034356

### SUMMARY OF THE INVENTION

### PROBLEM TO BE SOLVED BY THE INVENTION

On the other hand, in order for the airbag to expand and deploy in order to receive the occupant, the airbag needs to be positioned at an expected position.
Therefore, a technique for adjusting the position of an expanding and deploying airbag using a tensile cloth is also known. With this manner of technique, when the airbag expands and deploys, the tensile cloth surrounds and retains the outside of the airbag and biases the airbag to the side of the occupant.

On the other hand, if the tensile cloth biases the expanding and deploying airbag toward the occupant, the tensile cloth may not be able to properly adjust the airbag position if the airbag is diverted from the intended position thereof.
However, the technique according to Patent Document 1 as described above cannot solve such a problem.

In light of the circumstances described above, an object of the present invention is to provide an occupant restraining device in which the tensile cloth can more accurately adjust the position of the airbag when the airbag is expanded and deployed.

### MEANS TO SOLVE THE PROBLEM

The occupant restraining device according to the present invention includes:
tensile cloths having both ends secured to the upper and lower parts of a vehicle seat respectively, and that bias an expanding and deploying airbag to the side of an occupant seated in the seat, towards the occupant, wherein
the airbag is formed with retaining grooves that retain the tensile cloths during expansion and deployment.

### EFFECT OF THE INVENTION

According to the present invention, when the airbag expands and deploys, the airbag can be more accurately positioned.

### BRIEF DESCRIPTION OF THE DRAWINGS

FIG. 1 is a diagram illustrating a state in which the occupant restraining device according to Embodiment 1 is attached to a vehicle seat.
FIG. 2 is a schematic diagram illustrating a state in which an airbag of the occupant restraining device is expanded and deployed.
FIG. 3 is an enlarged view of the expanded and deployed airbag.
FIG. 4 is a transverse cross-sectional view of the airbag along line IV-IV in FIG. 3.
FIG. 5 is a longitudinal cross-sectional view of the airbag along line V-V in FIG. 3.
FIG. 6 is a longitudinal cross-sectional view of the airbag along line VI-VI in FIG. 5.
FIG. 7 is a schematic diagram illustrating a state in which an airbag of the occupant restraining device according to Embodiment 2 is expanded and deployed.
FIG. 8 is an enlarged view of the expanded and deployed airbag.
FIG. 9 is a transverse cross-sectional view of the airbag along line I X- I X in FIG. 8.
FIG. 10 is a longitudinal cross-sectional view of the airbag along line X-X in FIG. 8.
FIG. 11 is a longitudinal cross-sectional view of the airbag along line X I - X I in FIG. 10.
FIG. 12 is a schematic diagram illustrating a state in which an airbag of the occupant restraining device according to Embodiment 3 is expanded and deployed.
FIG. 13 is a schematic diagram illustrating a state in which an airbag of the occupant restraining device according to Embodiment 4 is expanded and deployed.
FIG. 14 is a schematic diagram illustrating a state in which an airbag of the occupant restraining device according to Embodiment 5 is expanded and deployed.

### DESCRIPTION OF THE PREFERRED EMBODIMENTS

The occupant restraining device according to the Embodiment of the present invention will be described in detail below according to the diagrams. The occupant restraining device according to the embodiment of the present invention is equipped to a seat of a vehicle.

### Embodiment 1

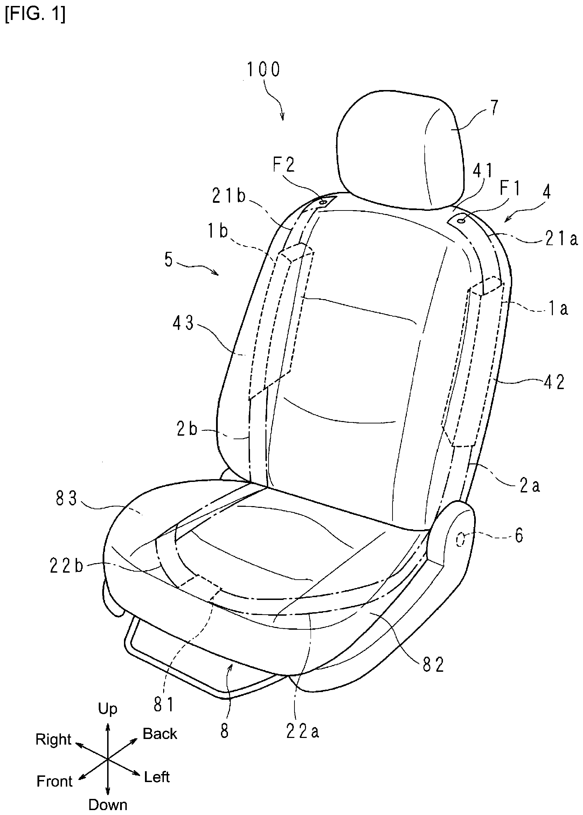

FIG. 1 is a diagram illustrating a state in which the occupant restraining device 100 according to Embodiment 1 is attached to a vehicle seat 5. FIG. 1 illustrates a state before the airbag expands and deploys. For convenience, descriptions will be given in the following using each of the front-to-back, left-right, and up-down directions defined in the figures.

The seat 5 includes the seat cushion 8 on which the occupant sits, and a seatback 4 that stands up from the back side of the seat cushion 8 and supports the back of the occupant. The lower edge of the seatback 4 is provided at the rear edge of the seat cushion 8, and is rotatably retained by a shaft 6. Accordingly, the seatback 4 can be adjusted at an angle by rotating the shaft 6 in the front-to-back direction.

A headrest part 7 is provided in the center in the left-right direction on the upper part of the seatback 4 rising up from the seatback 4. The headrest part 7 supports the head of the occupant seated on the seat cushion 8.

The occupant restraining device 100 includes airbag modules 1a and 1b containing an airbag stowed within the housing and tensile cloths 2a and 2b that perform position adjustment of the airbag that expands and deploys. The airbag module 1a is provided on the left side of the seatback 4, and the airbag module 1b is provided on the right side of the seatback 4. The airbag modules 1a and 1b are arranged between the frame (not shown) inside the seatback 4 and the cover covering the frame.

FIG. 1 illustrates a case where an airbag module 1b is provided on the right side of the seatback 4 and an airbag module 1a is provided on the left side of the seatback 4, but the present invention is not limited to this and the airbag modules 1a and 1b may be provided on only one side.

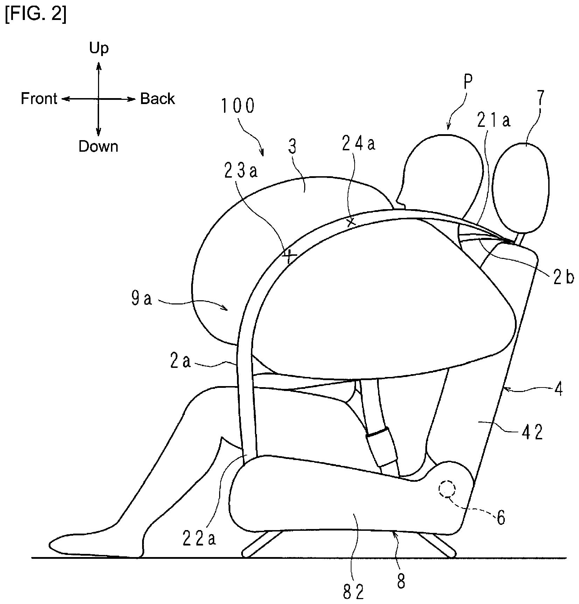

Each of the airbag modules 1a and 1b includes an airbag 3 (see FIG. 2), and an inflator (not shown) that emits gas into the airbag 3.

The airbag 3 is formed by sewing the outer edges of two panels together, with, for example, the aforementioned inflator arranged inside the airbag 3. In the event of a vehicle collision, the occupant restraining device 100 protects the occupants through expansion and deployment of the airbag 3 in the forward direction and receiving the occupant.

In FIG. 1, for convenience, the tensile cloths 2a and 2b are illustrated by an alternate long and short dashed line. Tensile cloths 2a and 2b are strips of prescribed width, with the tensile cloth 2a being provided on the left side of the seatback 4 and the tensile cloth 2b being provided on the right side of the seatback 4.

With the tensile cloth 2a, the upper end part 21a is secured to a securing position F1 of the seatback 4 frame on the left side of the headrest part 7 that is the upper surface 41 of the seatback 4. With the tensile cloth 2b, the upper end part 21b is secured to a securing position F2 of the seatback 4 frame on the right side of the headrest part 7 that is the upper surface 41 of the seatback 4.

On the other hand, a lower end part 22a of the tensile cloth 2a and a lower end part 22b of the tensile cloth 2b are retained by the lower securing part 81 provided in the center at the front of the seat cushion 8. The lower securing part 81 includes, for example, two metal plates, and the lower end parts 22a and 22b of the tensile cloths 2a and 2b are sandwiched between such metal plates.

The tensile cloths 2a and 2b are arranged inside these side parts from the seatback 4 to the seat cushion 8. The tensile cloth 2a is arranged from the left side of the seatback 4 to the left side of the seat cushion 8, and the tensile cloth 2b is arranged from the right side of the seatback 4 to the right side of the seat cushion 8.

Each of the tensile cloths 2a and 2b has the middle section thereof passing through the airbag modules 1a and 1b, and are joined to each airbag 3 in the airbag modules 1a and 1b as described below.

With the occupant restraining device 100 according to Embodiment 1, when a vehicle collides or is heavily impacted, the airbag 3 instantly breaks the cover of the seatback 4 and expands and deploys toward the front of the seat 5. In addition, at the same time as the expansion and deployment of the airbag 3, the tensile cloths 2a and 2b burst out from both side parts of the seat 5 together with the airbag 3 to retain the expanding and deploying airbag 3, enabling arranging the airbag 3 at the center of the seatback 4, in other words, the occupant side of the seat cushion 8.

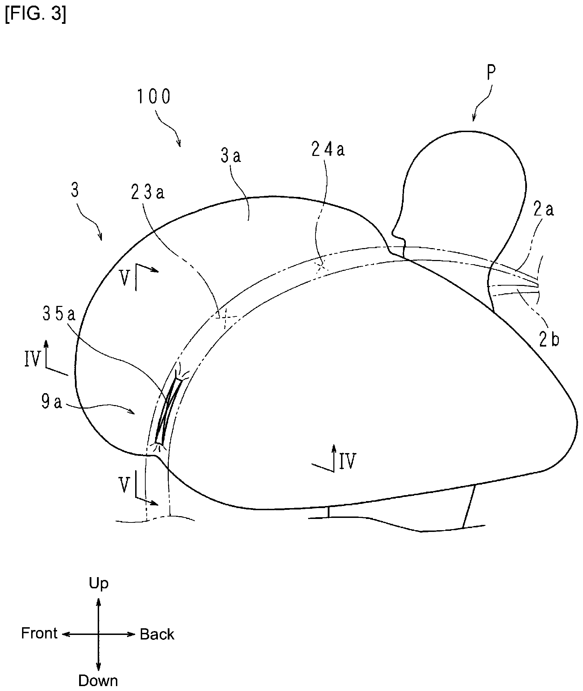

FIG. 2 is a schematic diagram illustrating a state in which an airbag 3 of the occupant restraining device 100 is expanded and deployed. For convenience, FIG. 2 illustrates only the expansion and deployment of the airbag 3 on the left side of the occupant P seated on the seat cushion 8. In effect, however, the airbag 3 expands and deploys similarly on both the left and right sides of the occupant P, where position adjustment of the airbag 3 on the left side is performed by the tensile cloth 2a, and position adjustment of the airbag 3 on the right side is performed by the tensile cloth 2b (see FIG. 3). Therefore, a description of the action and movement of the tensile cloth 2a on the left side of the seat 5 will be described using FIG. 2, and the description of the tensile cloth 2b will be omitted.

As illustrated in FIG. 2, when a vehicle is in a collision, the airbag 3 on the left side breaks the cover from the inside of the side surface 42 of the seatback 4 and expands and deploys toward the front of the seat 5. In addition, simultaneous with the expansion and deployment of the airbag 3, the tensile cloth 2a also bursts out and surrounds the outside of the expanding and deploying airbag 3, which is then arranged to the center of the seatback 4, in other words, where the occupant P is sitting on the seat cushion 8, and holds and restrains the occupant P to protect the occupant P.

Here, the tensile cloth 2a inevitably comes into partial contact with the outer surface of the airbag 3. With the occupant restraining device 100 according to Embodiment 1, a prescribed location of the contact area between the airbag 3 and the tensile cloth 2a is sewn together to join the tensile cloth 2a to the airbag 3.

In the example of FIG. 2, the tensile cloth 2a is sewn to the airbag 3 at two joint sections 23a and 24a indicated by an "X". The joint section 23a is positioned below the joint section 24a.

In addition, in the occupant restraining device 100, a retaining groove 9a that retains the tensile cloth 2a is provided below the joint section 23a and on the lower part of the airbag 3. The retaining groove 9a receives and retains the tensile cloth 2a when the airbag 3 expands and deploys, preventing the airbag 3 from leaving the normal position thereof.

Here, the lower part of the airbag 3 means from the lower end part of the expanded and deployed airbag 3 to the part of the airbag 3 that is most inflated in the vehicle width direction. The section of the airbag 3 lower than the center in the vertical direction is illustrated in general, but is not limited thereto.

In addition the upper part of the airbag 3 is defined as from the upper end part of the expanded and deployed airbag 3 to the part of the airbag 3 that is most inflated in the vehicle width direction. The section of the airbag 3 higher than the center in the vertical direction is illustrated in general, but is not limited thereto.

Note that the most inflated part of the airbag 3 in the vehicle width direction is the most inflated part in the contact area where the expanded and deployed airbag 3 contacts the tensile cloths 2a and 2b, and may differ from the most inflated part of the entire airbag 3.

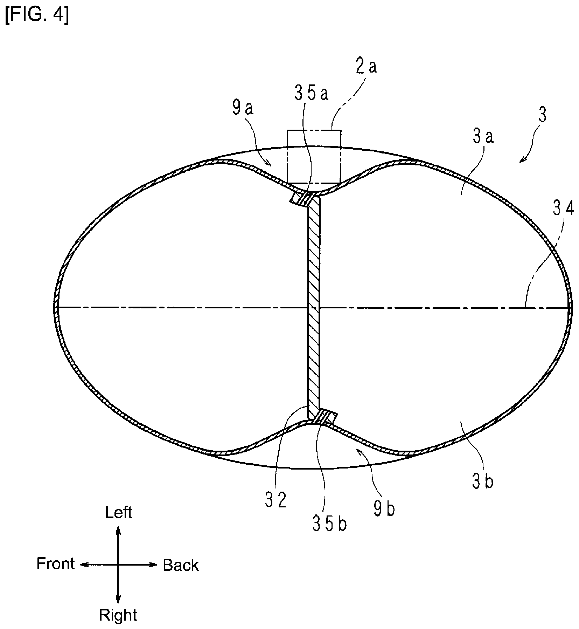

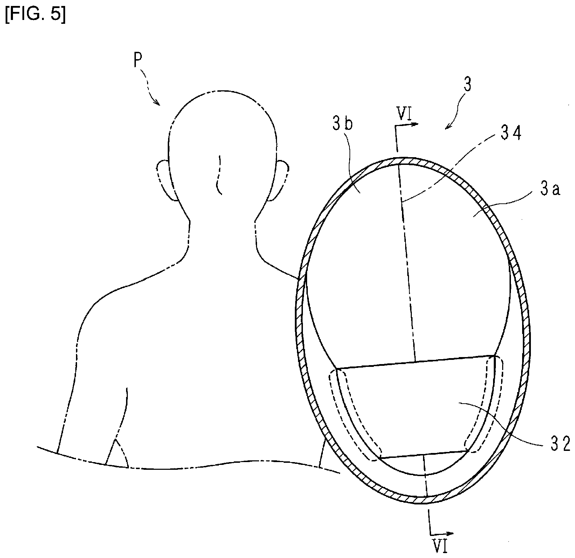

FIG. 3 is an enlarged view of the expanded and deployed airbag 3. FIG. 4 is a cross-sectional view of the airbag 3 along the line IV-IV in FIG. 3. FIG. 5 is a cross-sectional view of the airbag 3 along the line V-V in FIG. 3. FIG. 4 is a view from below. In FIG. 5, the occupant P is illustrated as a double-dashed line for convenience of explanation. In FIG. 3 and FIG. 4, the tensile cloth 2a is illustrated as a double-dashed line for convenience.

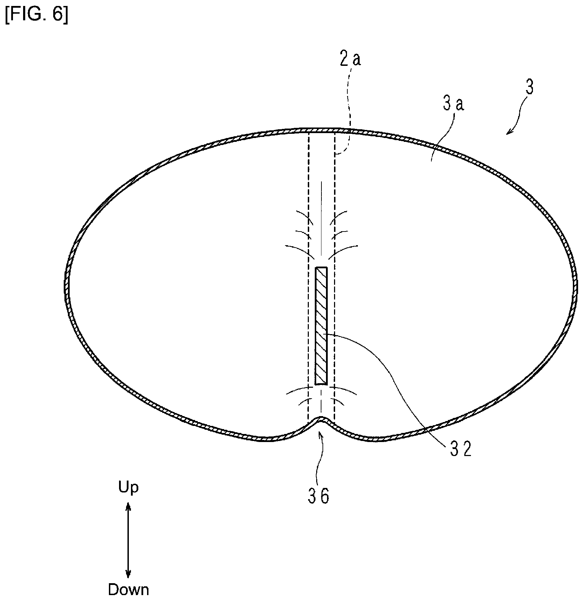

FIG. 6 is a cross-sectional view of the airbag 3 along line VI-VI in FIG. 5. In FIG. 6, for convenience, the tensile cloth 2a is illustrated by a dashed line.

The airbag 3 is a bag body formed by joining a first panel 3a (contact section) and a second panel 3b (non-contact section) of the same approximate shape by sewing the perimeters together. The first panel 3a and second panel 3b are, for example, circular. Therefore, the airbag 3 is restricted by a seam 34 during expansion and deployment, and when the expansion and deployment is complete, the airbag 3 has a substantially elliptic shape in the longitudinal and transverse sections.

When the airbag 3 is expanded and deployed, the first panel 3a and the second panel 3b face each other, with the first panel 3a joined to the tensile cloth 2a as described above and the second panel 3b facing the occupant P. In FIG. 4 and FIG. 5, the seam 34 of the airbag 3 is illustrated by an alternate long and short dashed line.

The airbag 3 is also equipped with an internal tether 32 that controls the shape of the airbag 3 during expansion and deployment. Furthermore, the lower part of the airbag 3 has a retaining groove 9a in the first panel 3a and a groove 9b in the second panel 3b, as described below. The retaining groove 9a and groove 9b are formed by the internal tether 32. For the sake of explanation, the case in which the airbag 3 is expanded and deployed will be used below.

As mentioned above, the internal tether 32 is provided inside the airbag 3. The internal tether 32 has a substantially trapezoidal sheet shape, with the shorter of the two substantially parallel sides on the lower side and the longer side on the upper side, and is located at the lower part of the airbag 3 (see FIG. 5). The internal tether 32 is provided at a prescribed distance from the bottom edge of the airbag 3.

The internal tether 32 is constructed between the first panel 3a and the second panel 3b. One of the two sides adjacent to the aforementioned short side of the internal tether 32 is sewn to the bottom of the first panel 3a and the other is sewn to the bottom of the second panel 3b. This forms a seam 35a in the first panel 3a and a seam 35b in the second panel 3b (see FIG. 3 and FIG. 4).

As described above, the inside of the first panel 3a and second panel 3b are restrained by the internal tether 32, so that the airbag 3 is restricted from expanding in the direction opposite the first panel 3a and second panel 3b (hereafter, the thickness direction of the airbag 3) during expansion and deployment.

In particular, the first panel 3a is joined to the internal tether 32 at the lower seam 35a and the second panel 3b is joined to the internal tether 32 at the lower seam 35b. Thus, in the first panel 3a, other sections can expand relatively freely except for the section corresponding to seam 35a, and in the second panel 3b, other sections can expand relatively freely except for the section corresponding to seam 35b.

That is, when the airbag 3 is expanded and deployed, the lower part of the first panel 3a and the lower part of the second panel 3b pull against each other via the internal tether 32, so that in the first panel 3a, the area pertaining to seam 35a and the area around seam 35a, and in the second panel 3b, the area pertaining to seam 35b and the area around seam 35b, are concave. This forms a retaining groove 9a in the first panel 3a and a groove 9b in the second panel 3b.

In other words, in the first panel 3a, a retaining groove 9a is formed in the section corresponding to the internal tether 32 (seam 35a). In the second panel 3b as well, a groove 9b is formed in the area corresponding to the internal tether 32 (seam 35b) (see FIG. 4). In FIG. 5, the outside of the area enclosed by the dashed line corresponds to retaining groove 9a and groove 9b.

As mentioned above, the internal tether 32 is a substantially trapezoidal shape and has a prescribed dimension in the height direction. Therefore, seams 35a and 35b are formed in the vertical direction and over a prescribed range. Thus, the retaining groove 9a and groove 9b extend in the vertical direction and over a prescribed range. Furthermore, since the internal tether 32 has a substantially trapezoidal shape, the dimensions thereof in the direction that intersects said height direction (hereinafter referred to as the width direction) gradually decrease in the downward direction.

Furthermore, as described above, the periphery of the seam 35a in the first panel 3a and the periphery of the seam 35b in the second panel 3b are recessed, and the dimension of the internal tether 32 in the width direction gradually decreases in the downward direction. As a result, at the bottom of the airbag 3, the retaining groove 9a of the first panel 3a, and the groove 9b of the second panel 3b are connected, forming a recessed section 36 at the bottom end of the airbag 3.

As described above, in the occupant restraining device 100 of Embodiment 1, a retaining groove 9a is formed in the lower part of the first panel 3a that contacts the tensile cloth 2a during expansion and deployment of the airbag 3, extending in the vertical direction. During expansion and deployment of the airbag 3, the tensile cloth 2a is received in the retaining groove 9a (see FIG. 4). With the tensile cloth 2a, both edges in the width direction are in contact with the first panel 3a in the retaining groove 9a, whereas excluding the edges, there is a gap between the center thereof and the first panel 3a.

Thus, the tensile cloth 2a can slide along the length of the retaining groove 9a on the first panel 3a within the retaining groove 9a (see FIG. 6). The tensile cloth 2a is restricted from moving in the width direction of the retaining groove 9a.
Therefore, during expansion and deployment, the lower part of the airbag 3 can be prevented from separating from the tensile cloth 2a and deviating from the anticipated position, and the tensile cloth 2a can reliably apply bias to the airbag 3 and adjust the position thereof toward the occupant P.

The location of the internal tether 32 is not limited to the positions illustrated in FIG. 4 to FIG. 6. The internal tether 32 is provided such that the retaining groove 9a is formed at a position causing the tensile cloth 2a to suitably bias the expanding and deploying airbag 3 toward the occupant P.

As mentioned above, the internal tether 32 has a substantially trapezoidal shape, and the dimension thereof in the width direction gradually decreases in the downward direction. On the other hand, the lower end part 22a of the tensile cloth 2a is retained in the lower securing part 81 on the center side of the front of the seat cushion 8 (see FIG. 1).
That is, the closer the retaining groove 9a is to the lower end of the airbag 3, the closer it is to the lower end part 22a of the tensile cloth 2a (lower securing part 81). Therefore, the tensile cloth 2a is easily received in the retaining groove 9a during the expansion and deployment of the airbag 3.

Furthermore, since the retaining groove 9a is provided at the lower part of the airbag 3 and a recessed section 36 is formed in the lower end part of the airbag 3, when the airbag 3 expands and deploys, the tensile cloth 2a is caught in the retaining groove 9a and recessed section 36 to lift and position the airbag 3 more precisely to the desired position closer to the head of the occupant P.

As described above, by joining the airbag 3 and the tensile cloth 2a at the joint sections 23a and 24a in advance, the position of the expanding and deploying airbag 3 can be more stably adjusted.

In the above, the case in which tensile cloth 2a has two joint sections 23a and 24a has been described as an example, but is not limited thereto. The joint sections 23a and 24a are not required and may be omitted.

In the above, the case in which the tensile cloth 2a has two joint sections 23a and 24a has been described as an example, but is not limited thereto. With the tensile cloth 2a, such a joint section may be at one location or at three or more locations.

In the above description, the case in which two joint sections 23a and 24a are provided in a narrow region of the tensile cloth 2a has been described as an example, but is not limited thereto. For example, each of the joint sections 23a and 24a may be provided over a prescribed range along the longitudinal direction of the tensile cloth 2a.

In the above, the case in which the tensile cloths 2a and 2b are sewn to the airbag 3 has been described as an example, but is not limited thereto. For example, the tensile cloth 2a may be fixed to the airbag 3 by an adhesive, or may be fixed using a surface fastener or the like.

Note that the case in which the tensile cloths 2a and 2b have a band shape has been described as an example, but they are not limited thereto. The tensile cloths 2a and 2b may be a wide cloth or a large area of cloth.

### Embodiment 2

In Embodiment 1, a case where one of the tensile cloths 2a and 2b is provided for each airbag 3 has been described as an example, but is not limited thereto.

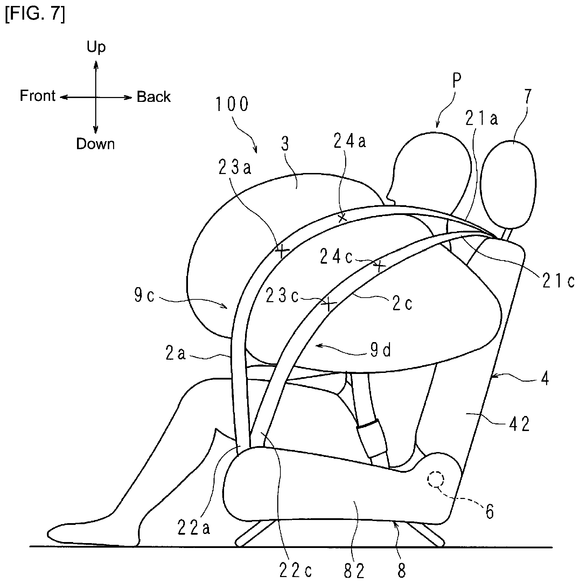

FIG. 7 is a schematic diagram illustrating a state in which an airbag 3 of the occupant restraining device 100 according to Embodiment 2 is expanded and deployed. In FIG. 7, for convenience, expansion and deployment of only the airbag 3 on the left side of the occupant P is illustrated, however in actuality, the airbag 3 expands and deploys in the same manner on both the left and right sides of the occupant P.

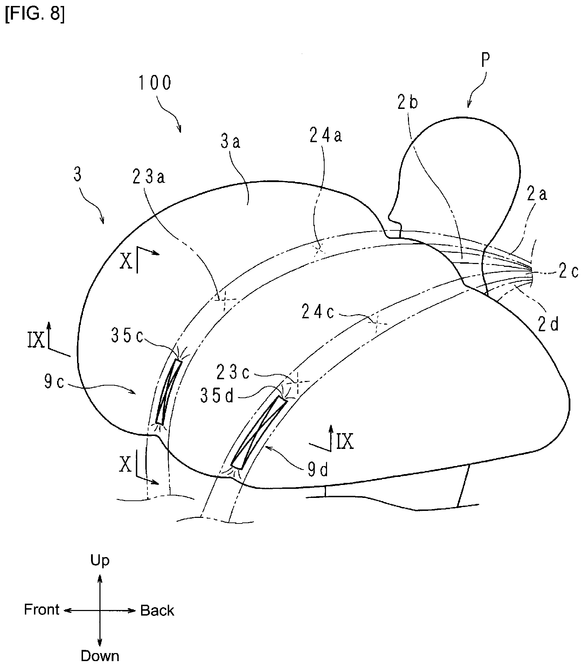

In the occupant restraining device 100 according to Embodiment 2, position adjustment is performed by the tensile cloths 2a and 2c on the left side airbag 3, and position adjustment is performed by the tensile cloths 2b and 2d on the right side airbag 3 (see FIG. 8).
In the following, an example of expansion and deployment of only the airbag 3 on the left side of the occupant P will be described with reference to FIG. 7.

The upper end part 21a of the tensile cloth 2a and the upper end part 21c of the tensile cloth 2c are secured to the upper part of the seatback 4. In addition, a lower end part 22a of the tensile cloth 2a and a lower end part 22c of the tensile cloth 2c are retained by the lower securing part 81 at the front center section of the seat cushion 8 (see FIG. 1). The tensile cloths 2a and 2c are arranged together at the left side of the seat 5.

With the occupant restraining device 100 according to Embodiment 2, the tensile cloth 2a has two joint sections 23a and 24a, and the tensile cloth 2c has two joint sections 23c and 24c. Of the joint section 23a and joint section 24a, the joint section 23a is positioned lower than the joint section 24a and of the joint section 23c and the joint section 24c, the joint section 23c is positioned lower than the joint section 24c.

With the occupant restraining device 100, a retaining groove 9c is provided below the joint section 23a of the tensile cloth 2a and below the lower part of the airbag 3 to receive and retain the tensile cloth 2a during expansion and deployment of the airbag 3. The retaining groove 9d is provided below the joint section 23c of the tensile cloth 2c and below the lower part of the airbag 3 to receive and retain the tensile cloth 2c during expansion and deployment of the airbag 3. The retaining grooves 9c and 9d receive and retain the tensile cloths 2a and 2c respectively when the airbag 3 expands and deploys, preventing the airbag 3 from deviating from the anticipated position thereof.

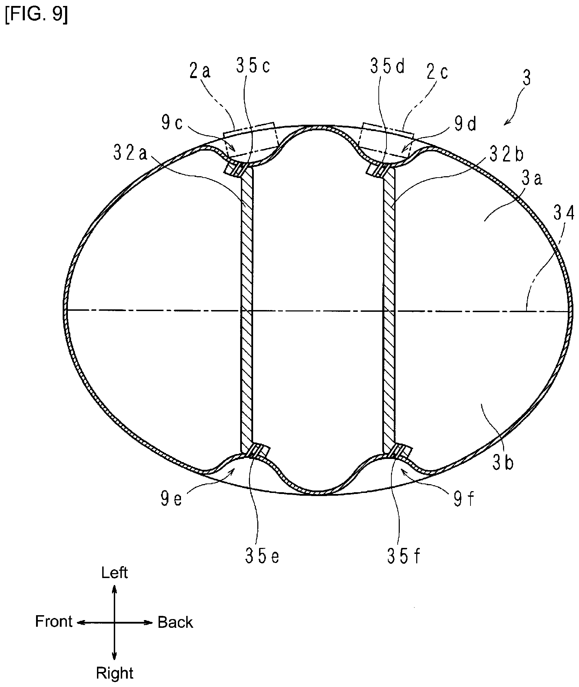

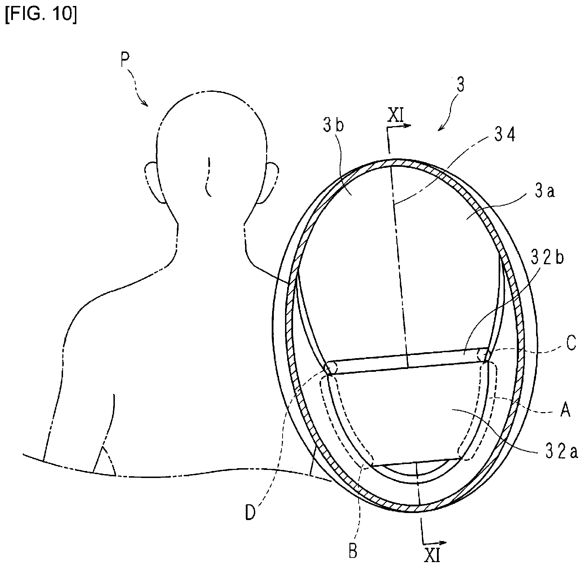

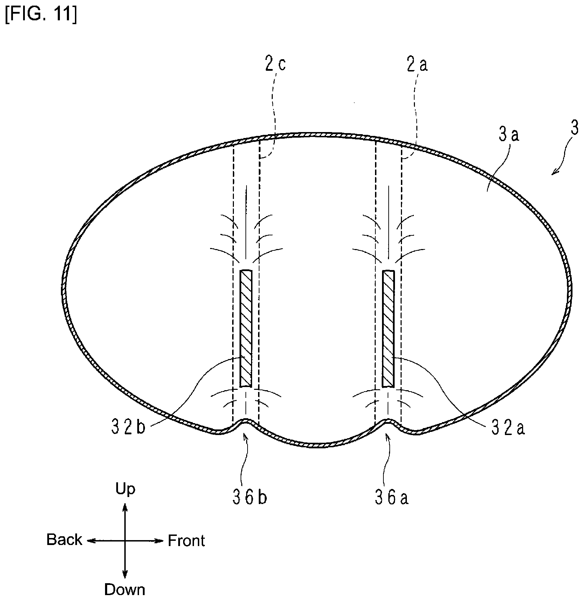

FIG. 8 is an enlarged view of the expanded and deployed airbag 3. FIG. 9 is a cross-sectional view of the airbag 3 along line IX-IX in FIG. 8. FIG. 10 is a longitudinal cross-sectional view of the airbag 3 along line X-X in FIG. 8. FIG. 9 is a view from below. In FIG. 10, the occupant P is illustrated as a double-dashed line for convenience of explanation. FIG. 11 is a longitudinal cross-sectional view of the airbag 3 along line XI-XI in FIG. 10. For convenience, the tensile cloths 2a and 2c are illustrated as dotted lines in FIG. 8 and FIG. 9 and as dashed lines in FIG. 11.

Airbag 3 is a bag body formed by joining a first panel 3a and a second panel 3b of the same shape by sewing the perimeters together. The first panel 3a and second panel 3b are, for example, circular. Therefore, the airbag 3 is restricted by a seam 34 during expansion and deployment, and when the expansion and deployment is complete, the airbag 3 has a substantially elliptic shape in the longitudinal and transverse sections.

When the airbag 3 is expanded and deployed, the first panel 3a and the second panel 3b face each other, with the first panel 3a joined to the tensile cloths 2a and 2c and the second panel 3b facing the occupant P. In FIG. 9 and FIG. 10, the seam 34 of the airbag 3 is illustrated by an alternate long and short dashed line.

In addition, the airbag 3 has internal tethers 32a and 32b. The lower part of the airbag 3 has retaining grooves 9c and 9d in the first panel 3a and grooves 9e and 9f in the second panel 3b, as described below. Retaining grooves 9c and 9d and grooves 9e and 9f are formed by the internal tethers 32a and 32b.
For the sake of explanation, the case in which the airbag 3 is expanded and deployed will be used below.

As described above, the internal tethers 32a and 32b are provided inside the airbag 3. The internal tethers 32a and 32b have a substantially trapezoidal sheet shape, with the shorter of the two substantially parallel sides on the lower side and the longer side on the upper side, and are located at the lower part of the airbag 3 (see FIG. 10). The internal tethers 32a and 32b are spaced at a prescribed distance from the bottom edge of the airbag 3. The internal tethers 32a and 32b are spaced at prescribed intervals in the front-to-back direction.

The internal tethers 32a and 32b are constructed between the first panel 3a and the second panel 3b. One of the two sides adjacent to the aforementioned short side of the internal tethers 32a and 32b is sewn to the bottom of the first panel 3a and the other is sewn to the bottom of the second panel 3b. Seams 35c and 35d are formed in the first panel 3a and seams 35e and 35f are formed in the second panel 3b (see FIG. 8 and FIG. 9).

As mentioned above, the inner sides of the first panel 3a and second panel 3b are restrained by the internal tethers 32a and 32b, so that the airbag 3 is restricted from expanding in the thickness direction during expansion and deployment.

In particular, the first panel 3a is joined to the internal tethers 32a and 32b at the lower seams 35c and 35d, and the second panel 3b is joined to the internal tethers 32a and 32b at the lower seams 35e and 35f. Thus, in the first panel 3a, other sections can expand relatively freely except for the sections corresponding to seams 35c and 35d, and in the second panel 3b, other sections can expand relatively freely except for the sections corresponding to seams 35e and 35f.

That is, during expansion and deployment of the airbag 3, the lower part of the first panel 3a and the lower part of the second panel 3b pull against each other via the internal tethers 32a and 32b, so that in the first panel 3a, the area pertaining to the seams 35c and 35d and the area around the seams 35c and 35d are concave, and in the second panel 3b, the area pertaining to the seams 35e and 35f and the area around the seams 35e and 35f are concave. This creates retaining grooves 9c and 9d in the first panel 3a and grooves 9e and 9f in the second panel 3b.

In other words, in the first panel 3a, the retaining grooves 9c and 9d are formed in the sections corresponding to the internal tethers 32a and 32b (seams 35c and 35d), respectively. In addition, in the second panel 3b, grooves 9e and 9f are also formed in the section corresponding to the internal tethers 32a and 32b (seams 35e and 35f) (see FIG. 9). In FIG. 10, the outside of the regions A and C surrounded by dashed lines correspond to the retaining grooves 9c and 9d, respectively, and the outside of the regions B and D surrounded by dashed lines correspond to the grooves 9e and 9f, respectively.

As described above, each of the internal tethers 32a and 32b have a substantially trapezoidal shape, so seams 35c, 35d and 35e, 35f are formed in the vertical direction and over a prescribed range. Thus, the retaining grooves 9c, 9d and 9e, 9f extend in the vertical direction and over a prescribed range. Furthermore, since the internal tethers 32a and 32b are substantially trapezoidal in shape, the dimensions thereof in the width direction gradually decrease in the downward direction.

Furthermore, as described above, the areas around the seams 35c and 35d in the first panel 3a and around the seams 35e and 35f in the second panel 3b are concave, and the dimensions of the internal tethers 32a and 32b in the width direction gradually decrease in the downward direction. As a result, at the lower part of the airbag 3, the retaining grooves 9c and 9d of the first panel 3a and grooves 9e and 9f of the second panel 3b are connected, and two recessed sections 36a and 36b are formed at the lower end part of the airbag 3.

As described above, in the occupant restraining device 100 of Embodiment 2, retaining grooves 9c and 9d are formed in the first panel 3a extending in the vertical direction during expansion and deployment of the airbag 3. During expansion and deployment of the airbag 3, the tensile cloths 2a and 2c are received in the retaining grooves 9c and 9d (see FIG. 9). With the tensile cloth 2a, both edges in the width direction are in contact with the first panel 3a in the retaining groove 9c, whereas excluding the edges, there is a gap between the center thereof and the first panel 3a. In addition, with the tensile cloth 2c, both edges in the width direction are in contact with the first panel 3a in the retaining groove 9d, whereas excluding the edges, there is a gap between the center thereof and the first panel 3a (see FIG. 9).

Thus, the tensile cloth 2a can slide in the retaining groove 9c along the length of the retaining groove 9c on the first panel 3a, and the tensile cloth 2c can slide in the retaining groove 9d along the length of the retaining groove 9d on the first panel 3a (see FIG. 11).
In addition, the tensile cloth 2a is restricted from moving in the width direction of the retaining groove 9c, and the tensile cloth 2c is restricted from moving in the width direction of the retaining groove 9d.

Therefore, during expansion and deployment, the lower part of the airbag 3 can be prevented from separating from the tensile cloths 2a and 2c and deviating from the anticipated position, and the tensile cloths 2a and 2c can reliably apply bias to the airbag 3 and adjust the position thereof toward the occupant P.

The internal tethers 32a and 32b are provided respectively so that the retaining grooves 9c and 9d are formed at positions where the tensile cloths 2a and 2c should contact and bias the expanding and deploying airbag 3 toward the occupant P.

As described above, the internal tethers 32a and 32b are substantially trapezoidal in shape, and the dimensions thereof in the width direction gradually decrease in the downward direction. That is, the closer the retaining grooves 9c and 9d are to the lower end part of the airbag 3, the closer they are to the lower end part 22a of the tensile cloth 2a and the lower end part 22c of the tensile cloth 2c, that is, the lower securing part 81. Therefore, the tensile cloths 2a and 2c are easily received in the retaining grooves 9c and 9d during the expansion and deployment of the airbag 3.

Furthermore, since retaining grooves 9c and 9d are provided at the lower part of the airbag 3 and recessed sections 36a and 36b are formed at the lower end part of the airbag 3, when the airbag 3 expands and deploys, the tensile cloth 2a enters into the retaining groove 9c and recessed section 36a and tensile cloth 2c enters into the retaining groove 9d and recessed section 36b to lift and more properly position the airbag 3 in the desired position closer to the head of the occupant P.

As described above, the airbag 3 and tensile cloth 2a are pre-joined at joint sections 23a and 24a, and the airbag 3 and tensile cloth 2c are pre-joined at joint sections 23c and 24c to enable more stable adjustment of the position of the expanding and deploying airbag 3.

As described above, as two tensile cloths 2a and 2c perform position adjustment for one airbag 3, and the airbags 3 and the two tensile cloths 2a and 2c are joined at the joint sections 23a, 24a, 23c, and 24c in advance, position adjustment of the expanding and deploying airbag 3 can be more stably adjusted.

In what has been described above, the case where two tensile cloths 2a and 2c are provided for one airbag 3 has been described as an example, but is not limited thereto, and there may be three or more tensile cloths 2 for one airbag 3.

Sections similar to Embodiment 1 are given the same code and detailed description thereof is omitted.

### Embodiment 3

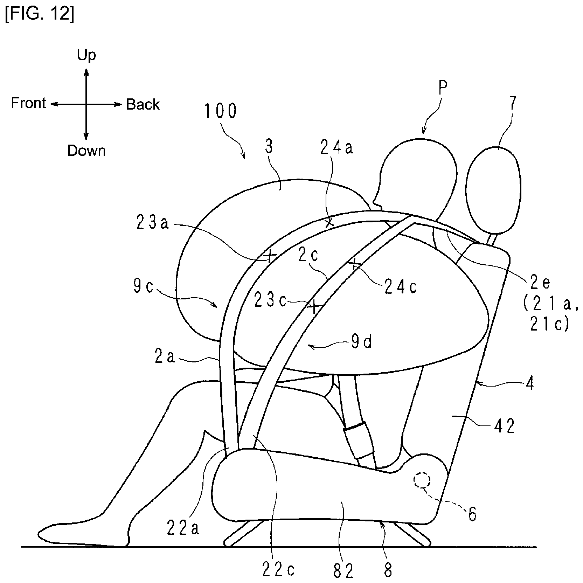

FIG. 12 is a schematic diagram illustrating a state in which an airbag 3 of the occupant restraining device 100 according to Embodiment 3 is expanded and deployed. FIG. 12 illustrates expansion and deployment of only the airbag 3 on the left side of the occupant P. In actuality, the airbag 3 expands and deploys on both the left and right sides of the occupant P in the same manner. However, in the following, FIG. 12 will be used to describe expansion and deployment of only the airbag 3 to the left of the occupant P as an example.

With the occupant restraining device 100 according to Embodiment 3, the tensile cloth 2a and the tensile cloth 2c are provided for one airbag 3 on the left side. The upper end part 21a of the tensile cloth 2a and the upper end part 21c of the tensile cloth 2c are retained at a securing position F1 of the seatback 4 (see FIG. 1).

In addition, a lower end part 22a of the tensile cloth 2a and a lower end part 22c of the tensile cloth 2c are retained by the lower securing part 81 at the front center section of the seat cushion 8 (see FIG. 1). The tensile cloths 2a and 2c are arranged together at the left side of the seat 5.

The tensile cloth 2a has two joint sections 23a and 24a, and the joint section 23a is positioned below the joint section 24a. In addition, the tensile cloth 2c has two joint sections 23c and 24c, and the joint section 23c is located below the joint section 24c.

With the occupant restraining device 100 according to Embodiment 3, the upper side of the tensile cloth 2a and the tensile cloth 2c are integrated together. In other words, the upper end part 21a of the tensile cloth 2a and the upper end part 21c of the tensile cloth 2c are sewn together over a prescribed range to form an integrated part 2e. The integrated part 2e is formed between the securing position F1 of the seatback 4 upper part and the joint section 24a of the tensile cloth 2a as well as the joint section 24c of the tensile cloth 2c. In addition, the integrated part 2e may be formed by using an adhesive.

In the occupant restraining device 100, as in Embodiment 2, a retaining groove 9c is provided below the joint section 23a of the tensile cloth 2a and below the airbag 3 to receive and retain the tensile cloth 2a. Below the joint section 23c of the tensile cloth 2c and below the lower part of the airbag 3, there is a retaining groove 9d that receives and retains the tensile cloth 2c. The retaining grooves 9c and 9d constrain the airbag 3 to the tensile cloths 2a and 2c to prevent the airbag 3 from deviating from the assumed position thereof when the airbag 3 expands and deploys.

The configuration of the retaining grooves 9c and 9d is the same as in Embodiment 2, so a detailed explanation is omitted.

As described above, in the occupant restraining device 100 of Embodiment 3, during expansion and deployment, the airbag 3 is restrained by the tensile cloths 2a and 2c because the retaining grooves 9c and 9d are formed in the airbag 3 and the tensile cloths 2a and 2c are constrained to the retaining grooves 9c and 9d. Therefore, separation of the lower part of the airbag 3 from the tensile cloths 2a and 2c and deviation from the anticipated position can be suppressed. Therefore, the tensile cloth 2a and 2c can reliably bias arrangement of the airbag 3 to the side of the occupant P.

The retaining grooves 9c and 9d are formed at positions where the tensile cloths 2a and 2c should contact the expanding and deploying airbag 3 to properly enable bias toward the occupant P. Therefore, when the airbag 3 is expanded and deployed, the tensile cloths 2a and 2c are easily received into the retaining grooves 9c and 9d.

Furthermore, with the occupant restraining device 100 according to Embodiment 3, as described above, the upper end part 21a of the tensile cloth 2a and the upper end part 21c of the tensile cloth 2c have an integrated part 2e that is sewn over a prescribed range.

Therefore, the work of stowing the tensile cloth 2a and tensile cloth 2c in the side part of the seatback 4 is simplified. Also, when the airbag 3 expands and deploys, the upper end part 21a of the tensile cloth 2a and upper end part 21c of the tensile cloth 2c both pop out, allowing the airbag 3 to more rapidly adjust position.

Note that, while in the description, only the upper end part 21a of the tensile cloth 2a and the upper end part 21c of the tensile cloth 2c are integrated, this is not a limitation. The lower end part 22a of the tensile cloth 2a and the lower end part 22c of the tensile cloth 2c may be integrated together.

Sections similar to Embodiment 1 are given the same code and detailed description thereof is omitted.

### Embodiment 4

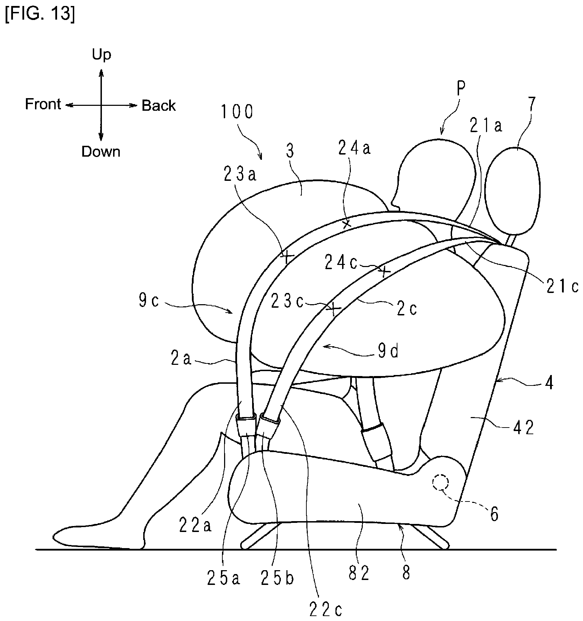

FIG. 13 is a schematic diagram illustrating a state in which an airbag 3 of the occupant restraining device 100 according to Embodiment 4 is expanded and deployed. For convenience, FIG. 13 illustrates expansion and deployment of only the airbag 3 on the left side of the occupant P. In actuality, the airbag 3 expands and deploys on both the left and right sides of the occupant P in the same manner. However, in the following, FIG. 13 will be used to describe expansion and deployment of only the airbag 3 to the left of the occupant P as an example.

With the occupant restraining device 100 according to Embodiment 4, the tensile cloth 2a and the tensile cloth 2c are provided for one airbag 3 on the left side. The upper end part 21a of the tensile cloth 2a and the upper end part 21c of the tensile cloth 2c are secured to the upper part of the seatback 4.

On the other hand, the lower end part 22a of the tensile cloth 2a and the lower end part 22c of the tensile cloth 2c are retained in the lower securing part 81 (see FIG. 1) of the seat cushion 8, via the pretensioner mechanisms 25a and 25b, respectively (tension applying mechanism). The pretensioner mechanisms 25a and 25b apply tension to the tensile cloths 2a and 2c.

The pretensioner mechanism 25a is provided between the lower end part 22a of the tensile cloth 2a and the lower securing part 81 of the seat cushion 8, and the pretensioner mechanism 25b is provided between the lower end part 22c of the tensile cloth 2c and the lower securing part 81 of the seat cushion 8.

The pretensioner mechanisms 25a and 25b are similar to buckle pretensioners used to retract the buckle of a vehicle seat belt in response to an impact. The pretensioner mechanisms 25a and 25b impart tension during expansion and deployment of the airbag 3 by pulling the tensile cloths 2a and 2c toward the lower securing part 81.

With the occupant restraining device 100 according to Embodiment 4, the tensile cloth 2a has two joint sections 23a and 24a, and the tensile cloth 2c has two joint sections 23c and 24c, similar to Embodiment 2.
In addition, as in Embodiment 2, in the occupant restraining device 100 of Embodiment 4, the lower part of the airbag 3 has retaining grooves 9c and 9d that receive and hold the tensile cloths 2a and 2c, respectively, during expansion and deployment of the airbag 3. A retaining groove 9c is formed below the joint section 23a of the tensile cloth 2a to retain the tensile cloth 2a and a retaining groove 9d is formed below the joint section 23c of the tensile cloth 2c to retain the tensile cloth 2c.

With the above configuration, the occupant restraining device 100 of Embodiment 4 can prevent the lower part of the airbag 3 from separating from the tensile cloths 2a and 2c and deviating from the anticipated position, and the tensile cloths 2a and 2c can reliably bias the arrangement of the airbag 3 to the side of the occupant P.

In addition, with the occupant restraining device 100 according to Embodiment 4, the pretensioner mechanisms 25a and 25b pull the tensile cloths 2a and 2c, respectively, toward the lower securing part 81 side during expansion and deployment of the airbag 3 enabling increasing the force with which the tensile cloths 2a and 2c bias the airbag 3 toward the side of the occupant P. Thus, the airbag 3 can be arranged more quickly and reliably on the side of the occupant P, and the occupant P can be protected.

Sections similar to Embodiment 1 are given the same code and detailed description thereof is omitted.

### Embodiment 5

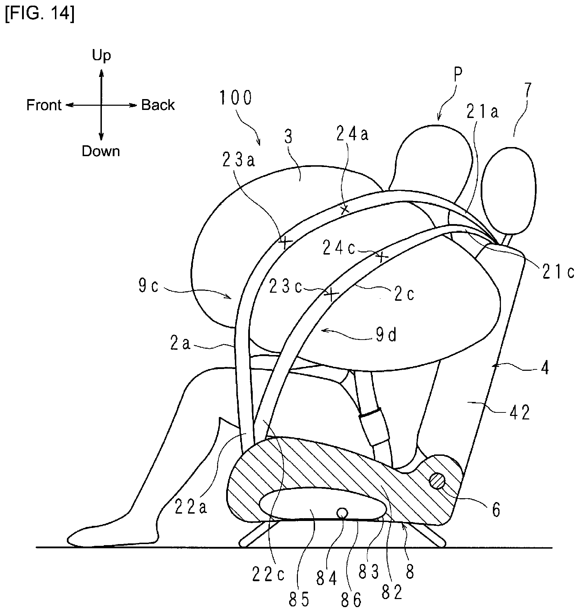

FIG. 14 is a schematic diagram illustrating a state in which an airbag 3 of the occupant restraining device 100 according to Embodiment 5 is expanded and deployed. For convenience, FIG. 14 illustrates expansion and deployment of only the airbag 3 on the left side of the occupant P. In actuality, the airbag 3 expands and deploys on both the left and right sides of the occupant P in the same manner. However, in the following, FIG. 14 will be used to describe expansion and deployment of only the airbag 3 to the left of the occupant P as an example.

Note that in FIG. 14, for convenience, only the seat cushion 8 is illustrated in a longitudinal cross-sectional view.

With the occupant restraining device 100 according to Embodiment 5, the tensile cloth 2a and the tensile cloth 2c are provided for one airbag 3 on the left side. The upper end part 21a of the tensile cloth 2a and the upper end part 21c of the tensile cloth 2c are secured to the upper part of the seatback 4. In addition, the lower end part 22a of the tensile cloth 2a and the lower end part 22c of the tensile cloth 2c are retained by the lower securing part 81 of the seat cushion 8 (see FIG. 1).

With the occupant restraining device 100 according to Embodiment 5, the tensile cloth 2a has two joint sections 23a and 24a, and the tensile cloth 2c has two joint sections 23c and 24c, similar to Embodiment 2.
As in Embodiment 2, the occupant restraining device 100 of Embodiment 5 also has retaining grooves 9c and 9d, which receive and retain the tensile cloths 2a and 2c, respectively, at the lower part of the airbag 3 during expansion and deployment of the airbag 3. A retaining groove 9c is formed below the joint section 23a of the tensile cloth 2a, and a retaining groove 9d is formed below the joint section 23c of the tensile cloth 2c.
The configuration of the retaining grooves 9c and 9d is the same as in Embodiment 2, so a detailed explanation is omitted.

On the other hand, the seat cushion 8 includes a cushion pad 82 and a panel member 86 arranged on the lower side of the cushion pad 82 and supporting the cushion pad 82. The cushion pad 82 includes a shock absorbing material that absorbs impact, and the panel member 86 constitutes the bottom section of the seat cushion 8.

The seat cushion 8 includes an airbag device 83 (tension applying mechanism) therein. The airbag device 83 is interposed between the cushion pad 82 and panel member 86. Additionally, the airbag device 83 includes an airbag 85, which is, for example, a bag body formed by sewing the peripheral edge of two panels, and an inflator 84 that emits gas into the airbag 85.

Before expansion and deployment, the airbag 85 is laid flat on the panel member 86 at a position corresponding to the thigh to buttocks of the occupant P. When a vehicle collision is detected, the inflator 84 operates to supply gas into the airbag 85, which expands and deploys upward.

Because of the configuration described above, even with the occupant restraining device 100 of Embodiment 5, the lower part of the airbag 3 can be prevented from separating from the tensile cloth 2a and 2c and deviating from the assumed position, and the tensile cloths 2a and 2c can reliably bias arrangement of the airbag 3 to the side of the occupant P.

In the occupant restraining device 100 of Embodiment 5, the airbag device 83 is provided inside the seat cushion 8, and when a vehicle collision occurs, the airbag 85 expands and deploys from the panel member 86 toward the cushion pad 82. At this time, the airbag 85 pushes up from the thigh of the occupant P to the upper side via the cushion pad 82. This increases the load on the tensile cloth 2a and tensile cloth 2c, and tension is applied to the tensile cloth 2a and tensile cloth 2c.

This effectively suppresses the so-called seatbelt submarining phenomenon, in which the occupant P slips out of the seat belt and slides down from the seat 5 and into the foot space. Accordingly, even more reliably, the airbag 3 can be arranged on the side of the occupant P to receive and protect the occupant P.

Sections similar to Embodiment 1 are given the same code and detailed description thereof is omitted.

The technical features (configuration elements) disclosed in the respective Embodiments 1 to 7 can be mutually combined, and by means of these combinations, new technical features can be formed.
Note that the scope of the claims is denoted by reference numerals to aid in understanding. The scope of the present invention is not limited to the description of the specification identified by such reference numerals, and includes all changes within the scope and range that are indicated by the claims and equivalent to the claims.

### EXPLANATION OF CODES

1a, 1b. Airbag module
2a, 2b, 2c, 2d. Tensile cloth
2e. Integrated part
3. Airbag
3a. First panel
3b. Second panel
4. Seatback
5. Seat
7. Headrest part
8. Seat cushion
9a, 9c, 9d. Retaining groove
23a, 24a, 23c, 24c. Joint part
25a, 25b. Pre-tensioner mechanism
32, 32a and 32b. Internal tether
36, 36a, 36b. Recessed section
41. Upper surface
42, 43. Side surface
83. Airbag device
100. Occupant restraining device
F1, F2. Securing position
P. Occupant

## Claims

1. An occupant restraining device (100), comprising:
tensile cloths (2a, 2b, 2c, and 2d) having both ends secured to the upper and lower parts of a vehicle seat (5) respectively, and that bias an expanding and deploying airbag (3) to the side of an occupant (P) seated in the seat (5), towards the occupant (P), wherein
the airbag (3) is formed with retaining grooves (9a, 9c, 9d) that retain the tensile cloths (2a, 2b, 2c, 2d) during expansion and deployment.

2. The occupant restraining device (100) according to claim 1, wherein the tensile cloths (2a, 2b, 2c, 2d) are joined at at least at one joint section (23a, 24a, 23c, 24c) on the surface of the airbag (3).

3. The occupant restraining device (100) according to claim 1 or 2, wherein the retaining grooves (9a, 9c, 9d) are formed on the lower part of the airbag (3).

4. The occupant restraining device (100) according to any one of claims 1 to 3, wherein the retaining grooves (9a, 9c, 9d) extend in the vertical direction of the expanded and deployed airbag (3).

5. The occupant restraining device (100) according to any one of claims 1 to 4, wherein
the tensile cloths (2a, 2b, 2c, 2d) are received in the retaining grooves (9a, 9c, 9d) during expansion and deployment of the airbag (3) and can slide along the length direction of the retaining grooves (9a, 9c, 9d), and
the retaining grooves (9a, 9c, 9d) restrict movement of the tensile cloths (2a, 2b, 2c, 2d) in the width direction of the retaining grooves (9a, 9c, 9d).

6. The occupant restraining device (100) according to any one of claims 1 to 5, wherein
recessed sections (36, 36a, 36b) that connect with the retaining grooves (9a, 9c, 9d) are formed on the lower end part of the expanded and deployed airbag (3).

7. The occupant restraining device (100) according to any one of claims 1 to 6, wherein
the airbag (3) includes:
a contact part (3a) that is in contact with the tensile cloths (2a, 2b, 2c, 2d) during expansion and deployment, a non-contact part (3b) opposite the contact part (3a), and internal tethers (32, 32a, 32b) that span between the contact part (3a) and non-contact part (3b) to control the shape of the airbag (3), and
the retaining grooves (9a, 9c, 9d) are formed on the contact part (3a) at a position corresponding to the internal tethers (32, 32a, 32b).

8. The occupant restraining device (100) according to any one of claims 1 to 7, wherein
the tensile cloths (2a, 2b, 2c, 2d) are provided with retaining grooves (9a, 9c, 9d) at positions enabling contact with and biasing of the expanding and deploying airbag (3) toward the occupant (P).

9. The occupant restraining device (100) according to claim 7, wherein
the internal tethers (32, 32a, 32b) are sheet-shaped and decrease in width in the downward direction.

10. The occupant restraining device (100) according to any one of claims 1 to 9, further comprising:
a tensioning mechanism (25a, 25b, 83) provided in the seat (5) that imparts tension on the tensile cloths (2a, 2b, 2c, 2d).
